# FASCICULE DE BREVET EUROPEEN

(11) **EP 2 904 720 B1**
(45) Date de publication et mention de la délivrance du brevet: **25.09.2019**
(21) Numéro de dépôt: 13770678.4
(22) Date de dépôt: 26.09.2013
(51) Int. Cl.: H04B 17/17, H04B 17/19

(54) **SYSTÈME D'AUTOTEST MÉTROLOGIQUE D'UN DISPOSITIF ÉMETTEUR D'UN SIGNAL ANALOGIQUE**
SELBSTTESTENDES METROLOGIESYSTEM FÜR EINE ANALOGE SIGNALSENDEVORRICHTUNG
SELF-TESTING METROLOGIC SYSTEM FOR AN ANALOG SIGNAL-TRANSMITTING DEVICE

(30) Priorité: 02.10.2012 FR 1202611
(43) Date de publication de la demande: 12.08.2015
(73) Titulaire: THALES, 92200 Neuilly-sur-Seine (FR)
(72) Inventeur: BOULANGEY, Jean-Marie, F-78851 Elancourt (FR); LORANS, Jean-Pierre, F-78851 Elancourt (FR)
(74) Mandataire: Lavoix
(86) Numéro de dépôt international: PCT/EP2013/070053
(87) Numéro de publication internationale: WO 2014/053387

(56) Documents cités:
- US-B1- 6 216 095
- HALDER A., CHATTERJE A: "Low-cost Production Testing of Wireless Transmitters", PROCEEDINGS OF THE 19TH INTERNATIONAL CONFERENCE ON VLSI DESIGN HELD JOINTLY WITH 5TH INTERNATIONAL CONFERENCE ON EMBEDDED SYSTEMS AND DESIGN , 3 janvier 2006 (2006-01-03), 7 janvier 2006 (2006-01-07), XP002698957, HYDERABAD, INDIA ISBN: 0-7695-2502-4 Extrait de l'Internet: URL:http://ieeexplore.ieee.org/stamp/stamp .jsp?tp=&arnumber=1581490 [extrait le 2013-06-17]

## Description

La présente invention concerne un système d'autotest métrologique d'un dispositif émetteur d'un signal analogique, en particulier un signal radiofréquence.

L'invention se situe dans le domaine des émetteurs de signal analogique, et plus particulièrement des émetteurs/simulateurs de signaux radiofréquences.

De tels dispositifs sont notamment utilisés pour tester le bon fonctionnement d'équipements électroniques adaptés à réagir d'une manière prévue à un signal radiofréquence de forme d'onde donnée, par exemple dans le domaine de l'aéronautique, pour tester des équipements à bord d'un aéronef.

Un autre exemple de dispositif est décrit dans le document US 6 216 095.

A cet effet, on connaît des systèmes qui permettent d'émettre des signaux radiofréquences selon un gabarit prédéterminé, comportant des informations de modulation temporelle, de fréquence et de puissance, par exemple fourni via une interface homme-machine, et de tester la réponse d'un équipement électronique embarqué vis-à-vis du signal radiofréquence émis. En cas de réponse inappropriée, l'équipement électronique embarqué est considéré défectueux, ce qui peut entraîner un démontage et un remplacement, impactant la disponibilité opérationnelle des aéronefs.

Cependant, une réponse inappropriée peut également être due à un défaut du signal radiofréquence émis par rapport à sa spécification initiale fournie par le gabarit.

Dans d'autres domaines techniques et industriels, dès lors qu'un dispositif utilise un émetteur de signal analogique avec des spécifications précises en termes de gabarit de modulation temporelle, de fréquence et de puissance, il est utile d'être en mesure de valider le signal analogique émis par rapport à cette consigne de gabarit. Ceci est valable pour des signaux radiofréquence, mais également pour des signaux dans les domaines optiques de fréquence laser, ultraviolet, infrarouge.

Un tel gabarit comporte des informations de modulation temporelle impulsionnelle ou permanente permettant de définir un mode d'émission impulsionnel ou un mode d'émission continu.

En mode impulsionnel, le gabarit de modulation temporelle définit des durées d'impulsions et des périodes de répétition associées à une fréquence d'émission. Le gabarit de modulation définit un mode d'émission continu par un état permanent.

Il existe un besoin de mesure fine et précise temporellement de signaux analogiques émis par un dispositif émetteur.

A cet effet, l'invention a pour l'objet un système d'autotest métrologique d'un dispositif émetteur d'un signal analogique selon la revendication 1.

Avantageusement, le système proposé permet un autotest de validation de bon fonctionnement, par rapport à un gabarit comportant des informations de modulation temporelle, de puissance et de fréquence, d'un dispositif émetteur de signaux analogiques. Avantageusement, la validation s'effectue au rythme très élevé des impulsions et permet de fournir des informations d'anomalie en cas de différence par rapport au gabarit et plus généralement, une information de validation ou de dysfonctionnement destinée à un opérateur.

Ainsi, notamment lorsqu'un dispositif émetteur est un simulateur utilisé dans la validation de fonctionnement d'un équipement électronique à réponse prévue par rapport à un signal radiofréquence reçu, il est possible de mettre en exergue un éventuel dysfonctionnement de l'émetteur de signal radiofréquence, qui peut alors être distingué d'un dysfonctionnement de l'équipement électronique testé.

Le système d'autotest selon l'invention peut présenter une ou plusieurs des caractéristiques des revendications dépendantes, prises indépendamment ou en combinaison.

D'autres caractéristiques et avantages de l'invention ressortiront de la description qui en est donnée ci-dessous, à titre indicatif et nullement limitatif, en référence aux figures annexées, parmi lesquelles :
- la figure 1 est un exemple d'application d'un système d'autotest métrologique selon l'invention dans une plateforme de validation d'équipement électronique ;
- la figure 2 est un exemple de réalisation d'un système d'autotest métrologique selon l'invention.

L'invention sera décrite ci-après dans son application particulière dans le domaine de validation d'équipements électroniques embarqués.

Néanmoins, cette application n'est nullement limitative, l'invention s'appliquant avec tout dispositif émetteur signal analogique ou onde électromagnétique de fréquence propre donnée, afin de valider le signal émis par rapport à un gabarit de modulation, de puissance et de fréquence donné.

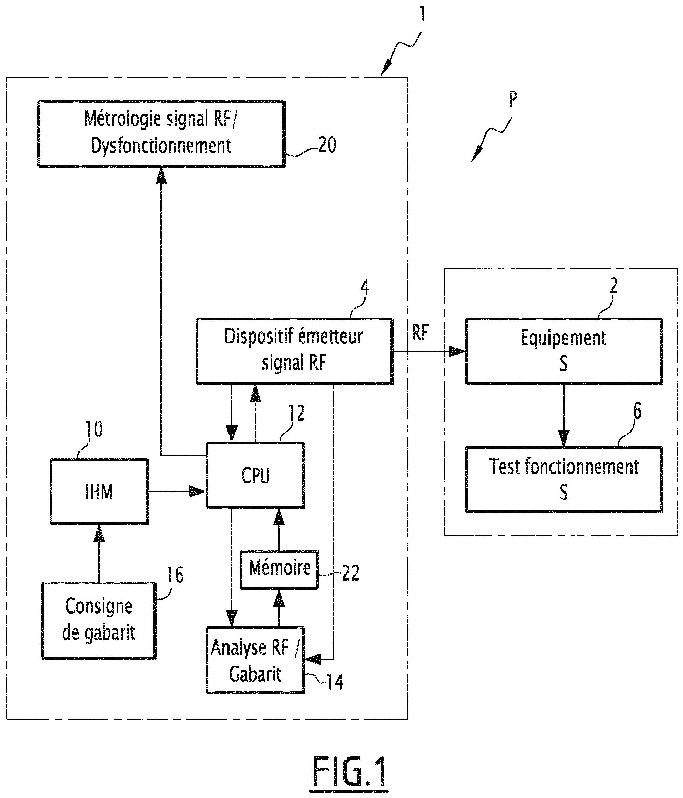

La figure 1 illustre un exemple d'une plateforme P, comportant un système 1 équipé d'autotest métrologique d'un dispositif émetteur 4 selon l'invention, la plateforme permettant la validation d'un équipement électronique 2 à partir de signaux émis par le dispositif émetteur 4.

L'équipement 2 est par exemple un équipement électronique embarqué à bord d'un aéronef qui a un fonctionnement donné en réponse à un signal radiofréquence de spécification donnée.

Ainsi, en fonctionnement de test usuel, on utilise un dispositif émetteur de signal radiofréquence RF noté 4,. Le signal RF est émis et reçu par l'équipement 2 à valider. Un moyen 6 de test de bon fonctionnement de l'équipement 2 en réponse au signal RF, selon des techniques connues appropriées non décrites en détail ici, est associé à l'équipement 2.

Le système équipé d'autotest 1 comporte également, outre le dispositif émetteur 4, une interface homme-machine (IHM) 10 permettant à un opérateur de rentrer diverses données, notamment des spécifications du signal radiofréquence à émettre par le dispositif émetteur 4.

Avantageusement, selon un mode de réalisation de l'invention, l'IHM 10 est connectée à des moyens de calcul 12, par exemple un micro-contrôleur, qui, en plus du pilotage du dispositif émetteur 4 selon les spécifications, permettent également de piloter des moyens 14 d'analyse métrologique du signal radiofréquence en sortie du dispositif émetteur 4, et de comparaison de ce signal radiofréquence par rapport à un gabarit de modulation, de puissance et de fréquence défini par une consigne de gabarit 16 fournie en entrée de l'IHM 10. Comme déjà mentionné ci-dessus, le gabarit spécifie des informations de modulation temporelle permettant de définir le mode impulsionnel et le mode d'émission continue (appelé également mode CW) du signal radiofréquence, une information de puissance et une information de fréquence du signal radiofréquence. Pour le mode impulsionnel, les informations de modulation temporelles permettent de définir la durée des impulsions DI et les périodes de répétition PRI associées à une fréquence d'émission FE. Le mode continu est indiqué par une information de modulation temporelle indiquant une modulation à l'état permanent.

Les moyens d'analyse et de comparaison 14 sont associés à des moyens de mémorisation temporelle 22 des résultats de l'analyse métrologique, en particulier de la présence de différence par rapport au gabarit de modulation et de puissance nominale émise.

De plus, le système comporte des moyens 20 de signalisation à un opérateur des résultats stockés dans les moyens de mémorisation temporelle 22, grâce à une lecture cyclique de l'état des moyens de mémorisation temporelle 22.

Le système équipé d'autotest 1 permet de valider l'état opérationnel du dispositif émetteur 4 et de détecter la moindre anomalie par rapport au gabarit, et de fournir des informations relatives aux anomalies à un opérateur en vue d'une maintenance du dispositif émetteur 4.

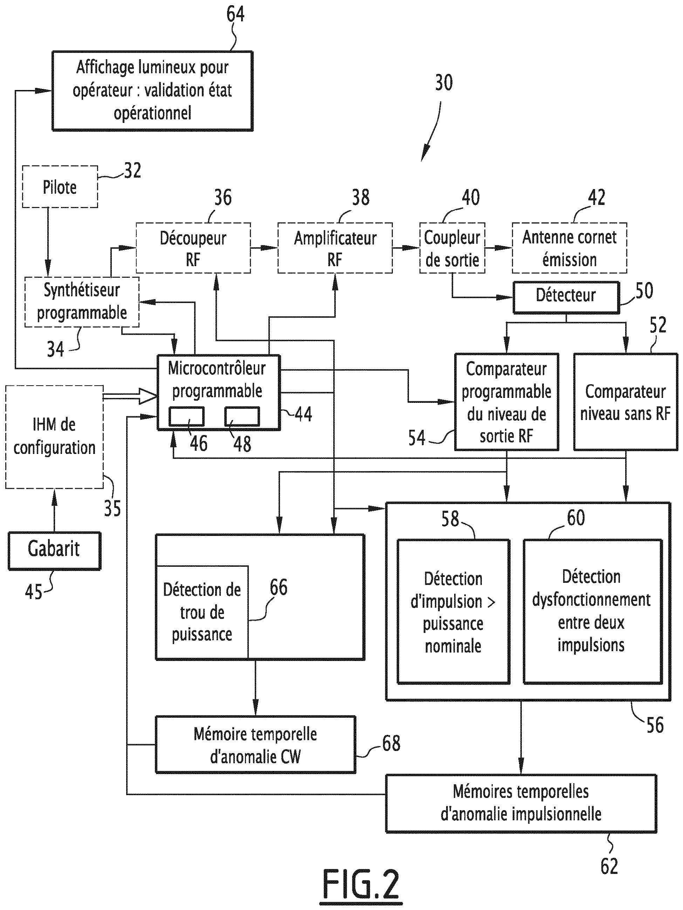

La figure 2 illustre un exemple de réalisation d'un système d'autotest métrologique 30 d'un dispositif émetteur dans le domaine radiofréquence qui est également appelé illuminateur radiofréquence.

Dans l'exemple de la figure 2, l'illuminateur radiofréquence est composé des unités représentées en traits pointillés qui sont respectivement :
- une unité de pilotage 32, apte à fournir des informations (horloge de référence) à un synthétiseur programmable 34, qui fournit un signal radiofréquence correspondant à un gabarit programmé fourni via une interface homme machine 35 ;
- un découpeur radiofréquence 36, qui applique la modulation temporelle selon le gabarit temporel programmé, qu'il s'agisse du mode impulsionnel ou du mode continu, suivi d'un amplificateur radiofréquence 38 et d'un coupleur de sortie 40.

L'illuminateur radiofréquence produit un signal radiofréquence émis via une antenne 42 à destination d'un récepteur non représenté.

La consigne de gabarit 45 qui est présente en entrée de l'interface homme machine 35 fournit les informations de modulation temporelle, une information de puissance nominale d'émission et une fréquence d'émission FE.

En mode impulsionnel, il est envisagé de traiter des signaux radiofréquence ayant des impulsions de durée DI pouvant être inférieure à 100ns, dans une gamme de fréquence d'émission FE de 1GHz à 20GHz par exemple.

Selon l'invention, le système 30 comporte en outre des moyens de calcul 44 sous la forme d'un micro-contrôleur programmable, apte à exécuter des logiciels 46, en fonction du fichier de configuration 48.

Dans un mode de réalisation, une pluralité de gabarits programmés sont mémorisés dans un fichier de configuration 48, et la consigne de gabarit 45 permet à un opérateur de choisit un gabarit parmi une pluralité de gabarits mémorisés. Les gabarits étant programmables, il est possible d'ajouter de nouveaux gabarits ou de changer des paramètres des gabarits mémorisés.

Le micro-contrôleur 44 est apte à envoyer des commandes de programmation au synthétiseur programmable 34, et les informations modulation temporelle du gabarit au découpeur de fréquence 36. De plus, le micro-contrôleur 44 est apte à piloter les moyens de mise en oeuvre de l'analyse métrologique du signal radiofréquence émis, et des moyens de signalisation des résultats d'analyse à un opérateur.

Le système 30 comprend en outre un détecteur de puissance radiofréquence 50, qui est un circuit apte à détecter l'énergie du signal radiofréquence émis. Le détecteur 50 a une plage de fonctionnement qui englobe la plage de puissance à surveiller par adjonction d'un atténuateur en entrée du montage. Par exemple, une plage de puissance supérieure à 10dBm est envisagée.

Le détecteur 50 reçoit en entrée le signal radiofréquence émis issu du coupleur de sortie 40 et envoie en sortie un signal dont l'amplitude est fonction de la puissance émise et la forme représentative de l'enveloppe de modulation impulsionnelle ou permanente du signal radiofréquence émis.

Le détecteur 50 est branché en sortie à un premier comparateur 52 qui surveille la plage de sortie du détecteur en mode repos ou « standby », donc en l'absence d'émission. Le comparateur 52 compare l'amplitude du signal reçu en sortie du détecteur 50 à un seuil spécifique au détecteur et le résultat de la comparaison est transmis directement au micro-contrôleur 44 qui peut alors détecter un dysfonctionnement du détecteur en dehors de la génération d'impulsions radiofréquences.

La sortie du détecteur 50 est également fournie à un deuxième comparateur 54 qui surveille la plage de sortie du détecteur en émission. Le comparateur 54 compare l'amplitude du signal issu du détecteur 50 à un niveau calculé et transmis par le micro-contrôleur, en fonction de la fréquence d'émission radiofréquence FE et d'un seuil S programmé correspondant à la puissance nominale indiquée par le gabarit.

Les résultats respectifs des comparateurs 52 et 54 sont transmis à un module d'analyse en mode impulsionnel 56, comportant d'une part un module électronique 58 de surveillance de la présence de signaux impulsionnels supérieurs au seuil S programmé correspondant à la puissance nominale et d'autre part, un module électronique 60 de surveillance de dysfonctionnement de l'illuminateur radiofréquence entre deux impulsions émises.

Le module 58 est apte à détecter la présence de signaux impulsionnels supérieurs au seuil S correspondant à la puissance nominale. Typiquement, dès qu'une variation par rapport à la puissance nominale dans une plage de 0,5dB est constatée, une information d'anomalie est mémorisée.

La surveillance est réalisée par une comparaison de la sortie du deuxième comparateur 54 au aux informations de modulation temporelle ou gabarit de modulation fournissant la durée d'impulsion DI et la période de répétition PRI, tenant compte d'un délai de propagation entre le gabarit de modulation et la sortie du comparateur 54. Ce module 58 est apte à analyser la présence d'un front de montée représentatif d'une impulsion dans une fenêtre temporelle inférieure à 180 nanosecondes pour exemple dans le cas de la réalisation, ce qui permet de valider le découpage impulsionnel et par conséquent la durée d'impulsion DI. Une détection d'anomalie par rapport au gabarit de modulation inférieure à 1 microseconde est réalisée. En cas de détection d'absence d'impulsion ou au contraire de présence d'impulsion de durée supérieure à la durée DI attendue, une information d'anomalie est stockée dans une mémoire temporelle 62 pendant environ 0,5 s (secondes). Le contenu de la mémoire 62 est lu par le micro-contrôleur 44 avec une répétition de fréquence f inférieure à 0,5s, par exemple f=0,25s, afin de lire systématiquement l'ensemble des informations relatives à des anomalies stockées.

Le module 60 est apte à réaliser une comparaison entre la sortie du premier comparateur 52 et le gabarit de modulation fournissant la durée des impulsions DI et leur fréquence d'émission FE. Ainsi, il est possible de détecter d'éventuelles impulsions parasites en dehors du gabarit de modulation. En cas de détection d'anomalie, une information est stockée dans la mémoire temporelle 62 susmentionnée.

Le micro-contrôleur, suite à la lecture d'anomalies au niveau impulsionnel détectées et stockées dans la mémoire 62 est apte à piloter des moyens d'affichage 64, permettant d'afficher pour un opérateur des informations relatives à l'état opérationnel de l'illuminateur radiofréquence, c'est-à-dire une validation de l'état opérationnel ou la signalisation d'anomalies constatées. Le micro-contrôleur 44 est connecté aux moyens d'affichage 64.

Dans ce mode de réalisation, les moyens d'affichage 64 sont réalisés par un affichage lumineux clignotant ou fixe, dont la couleur est représentative de l'état constaté : vert pour une validation de l'état opérationnel, orange en « standby » et rouge lorsque des anomalies sont détectées. La durée des signaux lumineux affichés est compatible avec une observation visuelle, par exemple de 1s. Ainsi, l'affichage à destination d'un opérateur est effectué en temps réel et permet de suivre la présence d'anomalies détectées au niveau des impulsions. Même une anomalie constatée pour une seule impulsion est signalée à l'opérateur. Celui-ci a alors la possibilité de surveiller le fonctionnement de l'illuminateur radiofréquence et d'agir, selon le nombre et la fréquence d'apparition des anomalies, par exemple en déclarant l'illuminateur radiofréquence défectueux et en lançant une opération de maintenance.

De plus, le système 30 comporte un module électronique 66 d'analyse en mode d'émission continu, apte à détecter une perte ponctuelle de puissance dans ce mode d'émission.

Le module 66 reçoit en entrée une information de validation de la puissance émise issue du comparateur 54 et détecte toutes les variations de la sortie du comparateur 54 par rapport au seuil programmé S correspondant à la puissance nominale. En cas de variation détectée, une information d'anomalie est stockée dans une mémoire temporelle 68 et conservée pendant une période de 0,5 s. Typiquement, dès qu'une variation en dessous de la puissance nominale dans une plage de 0,5dB est constatée, une information d'anomalie est mémorisée.

Le contenu de la mémoire 68 est scruté par le micro-contrôleur 44 avec une répétition de fréquence f inférieure à 0,5s afin de lire systématiquement l'ensemble des informations relatives à des anomalies stockées.

Ainsi, le micro-contrôleur 44 est apte à fournir des informations sur l'état opérationnel de l'illuminateur radiofréquence à la fois lorsque celui-ci est au repos (mode « standby ») et lorsque celui-ci est en émission, soit en mode impulsionnel soit en mode continu CW.

De plus, le micro-contrôleur 44 est également apte à surveiller le synthétiseur programmable 34, suite à une initialisation ou à une programmation d'une nouvelle fréquence d'émission de signal radiofréquence, introduite par exemple via l'IHM 35.

La fonction de surveillance du synthétiseur comprend la vérification de l'état du pilote 32, et la surveillance de la boucle à verrouillage de phase ou PLL (acronyme de « Phase-locked loop » en anglais) afin de vérifier le décrochage PLL lors de la prise en compte de la nouvelle fréquence du signal et sa stabilité suite au changement de fréquence.

Les circuits associés au micro-contrôleur comportent en outre des moyens d'inhibition du passage à un mode d'émission active (en mode continu CW ou en mode impulsionnel) si la fréquence du signal n'est pas conforme à la spécification.

Dans une variante de réalisation, en plus ou en remplacement des moyens de signalisation 64, le micro-contrôleur est apte à transmettre, en temps réel, des informations de fonctionnement et d'anomalies stockées dans les mémoires temporelles respectives 62 et 68, à un module applicatif ou à une interface homme-machine de manière à faciliter une opération de maintenance. Par exemple, par une liaison USB reliée avec un ordinateur et un logiciel de communication, le micro-contrôleur informe en temps réel par des messages, sur l'état de l'illuminateur radiofréquences, et transmet des résultats d'autotests permanents dans les différents modes de fonctionnement : initialisation, standby et émission active.

## Revendications

1. Système d'autotest métrologique d'un dispositif émetteur (4) d'un signal analogique apte à émettre un dit signal analogique selon un mode d'émission impulsionnel ou un mode d'émission continu, selon un gabarit donné comportant des informations de modulation temporelle, de puissance et de fréquence caractérisant ledit mode d'émission, **caractérisé en ce qu'**il comporte des moyens d'analyse métrologique comportant :
- des moyens (12, 14, 44, 56, 66) d'analyse et de comparaison du signal émis par ledit dispositif émetteur aux informations de modulation temporelle et de puissance au rythme des impulsions définies par les informations de modulation temporelle dudit gabarit, lesdits moyens de comparaison étant aptes, lors d'une émission en mode d'émission continu, à détecter une différence par rapport aux informations dudit gabarit dès son apparition, et
- des moyens (22, 62, 68) de mémorisation temporelle d'informations d'anomalie en cas de détection de différence par les moyens d'analyse et de comparaison,
lesdits moyens d'analyse et de comparaison comprenant des moyens (12, 44) de calcul aptes à obtenir des informations d'anomalies par lecture cyclique du contenu desdits moyens (22, 62, 68) de mémorisation avec une répétition de fréquence donnée du contenu desdits moyens de mémorisation.

2. Système d'autotest métrologique selon la revendication 1, **caractérisé en ce qu'**il comporte en outre des moyens (20, 64) de signalisation d'anomalies mémorisées.

3. Système d'autotest selon la revendication 2, **caractérisé en ce que** lesdits moyens d'analyse et de comparaison comportent :
- au moins un module électronique d'analyse (56) du signal émis en mode d'émission impulsionnel, et
- un module électronique (66) d'analyse du signal émis en mode d'émission continu, et **en ce que** lesdits moyens (12, 44) de calcul sont aptes à piloter lesdits moyens (20, 64) de signalisation d'anomalies mémorisés.

4. Système d'autotest selon la revendication 3, **caractérisé en ce qu'**il comporte en outre des moyens de détection (50) aptes à fournir une information de puissance émise et une enveloppe de modulation impulsionnelle ou permanente dudit signal émis par le dispositif émetteur.

5. Système d'autotest selon la revendication 4, **caractérisé en ce que** les moyens de détection (50) sont branchés en sortie d'un coupleur de sortie (40) du dispositif émetteur.

6. Système d'autotest selon l'une quelconque des revendications 4 ou 5 **caractérisé en ce qu'**il comporte un premier comparateur (52) branché en sortie desdits moyens de détection (50) apte à surveiller une plage de sortie des moyens de détection (50) en l'absence d'émission.

7. Système d'autotest selon l'une quelconque des revendications 4 à 6, **caractérisé en ce que** ledit module électronique d'analyse (66) du signal émis en mode d'émission continu reçoit en entrée une information de validation de la puissance émise et **en ce que** ledit module est adapté à détecter une perte de puissance par rapport à un seuil de puissance nominale correspondant à une information de puissance spécifiée par ledit gabarit.

8. Système d'autotest selon l'une quelconque des revendications 4 à 7, **caractérisé en ce qu'**il comporte en outre un deuxième comparateur (54) branché en sortie desdits moyens de détection (50) apte à comparer ladite information de puissance émise à un niveau fonction de la fréquence d'émission du signal spécifiée par ledit gabarit et dudit seuil de puissance correspondant à l'information de puissance spécifiée par ledit gabarit.

9. Système d'autotest selon l'une quelconque des revendications 4 à 8, **caractérisé en ce que** ledit au moins un module électronique d'analyse (56) du signal émis en mode d'émission impulsionnel comporte en outre des moyens (58) de détection d'impulsion supérieure à un seuil correspondant à l'information de puissance spécifiée par ledit gabarit.

10. Système d'autotest selon l'une quelconque des revendications 3 à 9, **caractérisé en ce que** ledit au moins un module électronique d'analyse (56) comporte en outre des moyens (60) de détection d'une anomalie lorsque ledit dispositif émetteur ne doit pas émettre de signal selon les informations de modulation temporelle fournies par le gabarit.

11. Système d'autotest selon l'une quelconque des revendications 3 à 10, **caractérisé en ce qu'**il comporte des moyens de validation d'un composant générateur d'une fréquence d'émission dudit dispositif émetteur et des moyens d'inhibition du passage à un mode d'émission continu ou impulsionnel en cas de validation négative.

12. Système d'autotest selon l'une quelconque des revendications 3 à 11, **caractérisé en ce qu'**il comporte des moyens d'interface homme machine permettant d'obtenir un gabarit comportant des informations de modulation temporelle, une information de puissance d'émission et une information de fréquence d'émission du signal analogique à émettre.

13. Système d'autotest selon la revendication 12, **caractérisé en ce qu'**il comporte des moyens d'obtention d'une information permettant de sélectionner un dit gabarit parmi une pluralité de gabarits mémorisés.

14. Système d'autotest selon l'une quelconque des revendications 1 à 13, **caractérisé en ce que** ladite fréquence donnée de répétition de lecture du contenu des moyens de mémorisation est inférieure à 0,5 secondes.

## Patentansprüche

1. Metrologisches Selbsttestsystem einer Sendevorrichtung (4) für ein analoges Signal, die eingerichtet ist, das analoge Signal gemäß einem Pulssendemodus oder einem stetigem Sendemodus gemäß einer vorgegebenen Lehre mit Zeit-, Leistungs- und Frequenzmodulationsinformationen, die den Sendemodus charakterisieren, zu senden, **dadurch gekennzeichnet, dass** es Mittel zur metrologischen Analyse aufweist, aufweisend:
- Mittel (12, 14, 44, 56, 66) zum Analysieren und zum Vergleichen des von der Sendevorrichtung gesendeten Signals mit Zeit-, Leistungs- und Frequenzmodulationsinformationen mit der Rate der Pulse, die durch die Zeitmodulationsinformation der Lehre definiert sind, wobei die Mittel zum Vergleichen eingerichtet sind, während eines Sendens im kontinuierlichen Sendemodus eine Abweichung in Bezug auf die Information der Lehre zu detektieren, sobald sie erscheint, und
- Mittel (22, 62, 68) zum zeitweiligen Speichern von Anomalieinformationen im Falle einer Abweichungsdetektion durch die Mittel zum Analysieren und zum Vergleichen,
wobei die Mittel zum Analysieren und zum Vergleichen Berechnungsmittel (12, 44) aufweisen, die geeignet sind, Anomalieinformationen durch zyklisches Lesen des Inhalts der Mittel (22, 62, 68) zum Speichern mit einer Wiederholfrequenz, die von dem Inhalt der Mittel zum Speichern vorgegeben ist, zu beschaffen.

2. Metrologisches Selbsttestsystem nach Anspruch 1, **dadurch gekennzeichnet, dass** es ferner Mittel (20, 64) zum Signalisieren gespeicherter Anomalien aufweist.

3. Selbsttestsystem nach Anspruch 2, **dadurch gekennzeichnet, dass** die Mittel zum Analysieren und Vergleichen aufweisen:
- mindestens ein elektronisches Modul zum Analysieren (56) des im Pulssendemodus gesendeten Signals und
- ein elektronisches Modul (66) zum Analysieren des im stetigen Sendemodus gesendeten Signals und dadurch, dass die Berechnungsmittel (12, 44) eingerichtet sind, die Mittel (20, 64) zum Signalisieren gespeicherter Anomalien zu steuern.

4. Selbsttestsystem nach Anspruch 3, **dadurch gekennzeichnet, dass** es ferner Detektionsmittel (50) aufweist, die eingerichtet sind, eine Sendeleistungsinformation und eine Hüllkurve einer Pulsmodulation oder permanenten Modulation des von der Sendevorrichtung gesendeten Signals bereitzustellen.

5. Selbsttestsystem gemäß Anspruch 4, dadurch charakterisiert, dass die Detektionsmittel (50) an den Ausgang eines Ausgangskopplers (40) der Sendevorrichtung angeschlossen sind.

6. Selbsttestsystem nach einem der Ansprüche 4 oder 5, **dadurch gekennzeichnet, dass** es ferner einen ersten Komparator (52) aufweist, der an den Ausgang der Detektionsmittel (50) angeschlossen ist und eingerichtet ist, einen Ausgangsbereich der Detektionsmittel (50) beim Fehlen eines Sendens zu überwachen.

7. Selbsttestsystem nach einem der Ansprüche 4 bis 6, dadurch charakterisiert, dass das elektronische Modul zum Analysieren (66) des im stetigen Sendemodus gesendeten Signals am Eingang eine Information zur Validierung der Sendeleistung aufweist und dadurch, dass das Modul eingerichtet ist, einen Leistungsverlust in Bezug auf eine nominale Leistungsschwelle, die einer durch die Lehre spezifizierte Leistungsinformation entspricht, zu detektieren.

8. Selbsttestsystem nach einem der Ansprüche 4 bis 7, dadurch charakterisiert, dass es ferner einen zweiten Komparator (52) aufweist, der am Ausgang der Detektionsmittel (50) angeschlossen ist und eingerichtet ist, die Sendeleistungsinformation mit einem Pegel zu vergleichen, der von der durch die Lehre spezifizierten Sendefrequenz des Signals und der Leistungsschwelle, die der durch die Lehre spezifizierten Leistungsinformation entspricht, abhängt.

9. Selbsttestsystem nach einem der Ansprüche 4 bis 8, **dadurch gekennzeichnet, dass** das mindestens eine elektronische Modul zum Analysieren (56) des im Pulssendemodus übertragenen Signals ferner Mittel (58) zur Detektion von Pulsen aufweist, die größer sind als ein Schwellwert, der der Leistungsinformation entspricht, die durch die Lehre spezifiziert ist.

10. Selbsttestsystem nach einem der Ansprüche 3 bis 9, **dadurch gekennzeichnet, dass** das mindestens eine elektronische Analysemodul (56) ferner Mittel (60) zum Detektieren einer Anomalie, wenn die Sendevorrichtung kein Signal gemäß den von der Lehre bereitgestellten Zeitmodulationsinformationen senden darf, aufweist.

11. Selbsttestsystem nach einem der Ansprüche 3 bis 10, **dadurch gekennzeichnet, dass** es Mittel zum Validieren einer Komponente, die eine Sendefrequenz der Sendevorrichtung erzeugt, und Mittel zum Verhindern des Übergangs in einen stetigen Sendemodus oder Pulssendemodus im Falle einer negativen Validierung aufweist.

12. Selbsttestsystem nach einem der Ansprüche 3 bis 11, **dadurch gekennzeichnet, dass** es Mensch-Maschine-Schnittstellenmittel aufweist, die es ermöglichen eine Lehre zu erhalten, die Zeitmodulationsinformationen, eine Sendeleistungsinformation und eine Information über die Sendefrequenz des zu sendenden analogen Signals enthält.

13. Selbsttestsystem nach Anspruch 12, **dadurch gekennzeichnet, dass** es Mittel zum Beschaffen von einer Information aufweist, die es ermöglicht, eine Lehre aus mehreren gespeicherten Lehren auszuwählen.

14. Selbsttestsystem nach einem der Ansprüche 1 bis 13, dadurch charakterisiert, dass die vorgegebene Wiederholfrequenz für das Lesen des Inhalts der Speichermittel unter 0,5 Sekunden ist.

## Claims

1. A self-testing metrologic system for an analog-signal transmitting device (4) able to transmit a said analog signal in a pulsed transmission mode or in a continuous transmission mode, according to a given template comprising time modulation, power and frequency information characterizing said transmission mode, **characterized in that** it comprises metrologic analysis means comprising:
- means (12, 14, 44, 56, 66) for analyzing and comparing the signal transmitted by said transmitting device with time modulation and power information at the rate of the pulses defined by the time modulation information of said template, said comparison means being able, during transmission in continuous transmission mode, to detect a difference relatively to the information of said template as soon as it appears, and
- means (22, 62, 68) for temporal memory storage of anomaly information in the case of a detection of difference by the analysis and comparison means,
said analysis and comparison means comprising computing means (12,44) able to obtain anomaly information by cyclic reading of the contents of said memory storage means (22, 62, 68), with a given repetition frequency of reading of the contents of said memory storage means.

2. The self-testing metrologic system according to claim 1, **characterized in that** it further comprises means (20, 64) for signaling anomalies stored in memory.

3. The self-testing metrologic system according to claim 2, **characterized in that** said analysis and comparison means include:
- at least one electronic module (56) for analyzing the signal transmitted in a pulsed transmission mode, and
- an electronic module (66) for analyzing the signal transmitted in a continuous transmission mode,
and **in that** said computing means (12,44) are able to control said means (20, 64) for signaling anomalies stored in memory.

4. The self-testing system according to claim 3, **characterized in that** it further comprises detection means (50) able to provide out transmission power information and a pulsed or permanent modulation envelope of said signal transmitted by the transmitting device.

5. The self-testing system according to claim 4, **characterized in that** the detection means (50) are connected at the output of an output coupler (40) of the transmitting device.

6. The self-testing system according to any one of claims 4 or 5, **characterized in that** it comprises a first comparator (52) connected at the output of said detection means (50) able to monitor an output range of the detection means (50) in the absence of transmission.

7. The self-testing system according to any of claims 4 to 6, **characterized in that** said electronic module (66) for analyzing the signal transmitted in a continuous transmission mode receives as an input a piece of information for validating the transmitted power and **in that** said module is adapted for detecting a power loss relatively to a rated power threshold corresponding to a piece of power information specified by said template.

8. The self-testing system according to any one of claims 4 to 7, **characterized in that** it further comprises a second comparator (54) connected at the output of said detection means (50) able to compare said information on transmitted power with a level depending on the transmission frequency of the signal specified by said template and on said power threshold corresponding to the power information specified by the template.

9. The self-testing system according to any one of claims of 4 to 8, **characterized in that** said at least one electronic module (56) for analysis of the signal transmitted in a pulsed transmission mode further comprises means (58) for detecting pulses greater than a threshold corresponding to the power information specified by said template.

10. The self-testing system according to any one of claims 3 to 9, **characterized in that** said at least one electronic analysis module (56) further comprises means (60) for detecting an anomaly when said transmitting device should not transmit any signal according to the time modulation information provided by the template.

11. The self-testing system according to any one of claims 3 to 10, **characterized in that** it comprises means for validating a component generating a transmission frequency of said transmitting device and means for preventing switching to a continuous or pulsed transmission mode in the case of negative validation.

12. The self-testing system according to any one of claims 3 to 11, **characterized in that** it comprises man-machine interface means allowing to obtain a template comprising time modulation information, transmission power information and transmission frequency information of the analog signal to be transmitted.

13. The self-testing system according to claim 12, **characterized in that** it comprises means for obtaining a piece of information allowing to select a said template from a plurality of templates stored in memory.

14. The self-testing system according to any one of claims 1 to 13, **characterized in that** said given repetition frequency of reading the contents of the memory storage means is less than 0.5 seconds.
